**Europäisches Patentamt**

**European Patent Office**

**Office européen des brevets**

(19)

(11) Veröffentlichungsnummer : **0 063 688
B1**

# (12) EUROPÄISCHE PATENTSCHRIFT

(45) Veröffentlichungstag der Patentschrift :
28.11.84

(21) Anmeldenummer : **82101988.2**

(22) Anmeldetag : **12.03.82**

(51) Int. Cl.³ : **B 01 D 9/00**

(54) **Kristallisiereinrichtung.**

(30) Priorität : **24.04.81 DE 3116277**

(43) Veröffentlichungstag der Anmeldung :
**03.11.82 Patentblatt 82/44**

(45) Bekanntmachung des Hinweises auf die Patenterteilung : **28.11.84 Patentblatt 84/48**

(84) Benannte Vertragsstaaten :
**AT BE CH DE FR GB IT LI LU NL SE**

(56) Entgegenhaltungen :
**DE-A- 1 815 119**
**DE-A- 2 842 303**
**DE-B- 1 193 474**
**DE-C-   487 527**
**CHEMIE-INGENIEUR-TECHNIK, Band 52, Nr. 7, Juli 1980, Weinheim, G. MATZ "Kristallisation aus Schmelzen", Seiten 570 bis 575**

(73) Patentinhaber : **Santrade Ltd.**
**Alpenquai 12 P.O. Box 321**
**CH-6002 Luzern (CH)**

(72) Erfinder : **Schermutzki, Konrad**
**Panoramaweg 72**
**D-7148 Remseck 3 (DE)**
Erfinder : **Weber, Wolfgang**
**Sonnenrain 19**
**D-7050 Waiblingen-Beinstein (DE)**

(74) Vertreter : **Wilhelm, Hans-Herbert, Dr.-Ing. et al**
**Patentanwälte Dr.-Ing. Hans-Herbert Wilhelm**
**Dipl.-Ing. Hanjörg Dauster Gymnasiumstrasse 31B**
**D-7000 Stuttgart 1 (DE)**

**EP 0 063 688 B1**

## Beschreibung

Die Erfindung betrifft eine Kristallisiereinrichtung, bestehend aus einem Kristallisierband (Kühlband) und einem Vorkristallisator, wobei die Keimbildung im Vorkristallisator in dünner Schicht eingeleitet wird und das Auskristallisieren auf dem Kühlband erfolgt, auf das die vorkristallisierte Schmelze in dicker Schicht aufgetragen wird.

Solche Kristallisiereinrichtungen werden zur Kristallisation aus Schmelzen verwendet, wobei die Keimbildungsgeschwindigkeit für eine bestimmte Unterkühlung ein Maximum erreicht. Ebenso ist die Kristallwachstumsgeschwindigkeit stark temperaturabhängig, so daß es bei der Kristallisation großer Mengen wünschenswert ist, die jeweils für die optimale Keimbildung bzw. das optimale Kristallwachstum notwendigen Bedingungen so zu erfüllen, daß große Mengen auskristallisiert werden können.

Aud diesem Grund setzt man Vorkristallisatoren ein, in denen die Keimbildung eingeleitet wird, wobei dann das Auskristallisieren auf endlos umlaufenden Kühlbändern erfolgt, auf die Schmelze gleichmäßig verteilt wird. Die Abkühlung wird durch darüber geblasene Luft oder ein unterhalb der oberen Hälfte des Bandes angeordnetes Kältebad oder durch unmittelbares Untertauchen des Bandes im Kältebad erreicht, so daß die Auskristallisierung erfolgt, so lange sich die erstarrende Schmelze auf dem Band befindet, an dessen Ende dann das auskristallisierte Produkt abgenommen wird. Es ist auch bekannt, als Vorkristallisator einen Tiegel einzusetzen, in den die Schmelze eingeleitet wird, der so über dem Bandanfang steht, daß aus einer unteren Öffnung die Schmelze auf das Band gegeben werden kann. Der Tiegel wird dabei auf einer Temperatur gehalten, die der für die maximale Keimbildungsgeschwindigkeit geltenden Temperatur entspricht. Um die Keimbildung zu vergrößern, wird der sich in dem Tiegel befindenden Schmelze ein Kristallpulver zugesetzt, das aus dem Kristallisationsbereich entnommen wird und zunächst gemahlen werden muß, was einen zusätzlichen Aufwand darstellt. Außerdem ist es bei dieser Art der Vorkristallisation nachteilig, daß eine sehr genaue Temperaturregelung erfolgen muß, da sonst ein Wiederaufschmelzen bzw. ein Erstarren der Schmelze im Tiegel eintreten kann.

Bei einer anderen bekannten Bauart ist der Vorkristallisator in der Zulaufzone der Schmelze angeordnet, der eine für die Keimbildungsgeschwindigkeit optimale Temperatur aufweist. Mit Hilfe von bohnenartigen Wischern werden Impflinge aus dem Kristallisationsbereich in diese Zulaufzone der Schmelze übertragen und können durch ihre intensive Mischwirkung zu einer Vervielfachung der Keimzahl beitragen, falls der Temperaturverlauf so abgestimmt ist, daß das Intervall der größten Keimhäufigkeit nicht zu rasch durchlaufen wird. Nachteilig ist es auch bei dieser Art der Vorkristallisation, daß zusätzlich Impfgut der Schmelze zugesetzt werden muß, um die Keimzahl zu vervielfachen. Dies ist immer mit einem apparativen Aufwand verbunden, außerdem wird immer zusätzliches Impfgut benötigt.

Aufgabe der Erfindung ist es, eine Kristallisiereinrichtung zu schaffen, bei der eine optimale Keimbildungsgeschwindigkeit und Keimzahl auch ohne Zugabe von zusätzlichem Impfgut in einem Vorkristallisator erreicht wird.

Die Erfindung besteht darin, daß der Vorkristallisator aus mindestens zwei gleichsinnig umlaufenden Walzen gebildet wird, die oberhalb des Kühlbandes übereinander so angeordnet sind, daß die Achse der obersten Walze in Richtung zum Bandanfang parallel zu einer durch die Achse der unteren Walzen gelegten Vertikalebene versetzt ist und daß die Walzen so angeordnet sind, daß ihre Mantelflächen an der Stelle ihres kürzesten Abstandes einen Scherspalt bilden, dessen Breite unterhalb der Schichtdicke der auf die oberste Walze aufgetragenen Schmelze liegt und daß ein an der Mantelfläche der obersten Walze auf der in Richtung zum Bandanfang liegenden Seite angreifendes Abschabemesser vorgesehen ist. Ein solcher erfindungsgemäßer Vorkristallisator macht es überflüssig, daß zusätzliches Impfgut der Schmelze zugesetzt werden muß, dadurch die Verwendung von Walzen und deren geeignete Anordnung zueinander die Keimbildung mit Hilfe von Scher- und Abriebkräften vorgenommen wird. Zu diesem Zweck sind zwei oder auch mehrere Walzen über/aneinander angeordnet, die gleichsinnig umlaufen. Auf die oberste Walze wird die Schmelze gegeben, die dann durch die Drehbewegung der Walze auf dieser gleichmäßig in einer dünnen Schicht verteilt wird und so lange an dieser Mantelfläche der obersten Walze haftet, bis sie in den Bereich kommt, in dem der Walzenabstand von der obersten zu der folgenden Walze sehr gering ist. Dieser Abstand ist erfindungsgemäß geringer als die Schichtdicke der aufgetragenen Schmelze, do daß diese auf der Oberfläche im Bereich des dadurch entstehenden Scherspaltes von der oberen Walze abgerieben bzw. vor dem Scherspalt angestaut wird. Es erfolgt dann eine Übertragung auf die folgende, gleichsinnig drehende Walze, wobei dieser Effekt dann je nachdem, wieviel Walzen angeordnet sind, weitergetragen wird, bis schließlich die Schmelze wieder auf die obere Walze gelangt und dort von dem Abschabemesser so abgeschabt wird, daß sie auf den Beginn des unterhalb der Walzen verlaufenden Kühlbandes fällt.

Sehr vorteilhaft ist es, wenn die Walzen mit einer Kühleinrichtung zur Abkühlung der Mantelflächen der Walzen versehen sind. Dabei kann die Kühleinrichtung als ein von der Walzenachse gebildetes Rohr vorgesehen sein, welches mit einem Wasserkreislauf verbunden ist und innerhalb der Kontur der Mantelfläche Spritzdüsen aufweist, die gegen die Innenwand der Mantelfläche gerichtet sind und daß eine Absaugvorrichtung vorgesehen ist, die das Kühlwasser aus dem Walzeninnenraum wieder dem Wasserkreislauf zuführt. Damit ist eine Möglichkeit gegeben, direkt auf die Kühltemperatur der Mantelflächen Einfluß zu nehmen und damit auch auf die Keimbildung, indem die auf die Walzen aufgebrachte Schmelze in dünner Schicht auf Temperatur mit Keimbildungsmaximum abgekühlt wird. Durch diese gezielte Unterkühlung auf den Mantelflächen der Walzen wird die Leistungsfähigkeit der gesamten Kristallisiereinrichtung gesteigert.

Günstig kann es auch sein, wenn die Kühleinrichtung als progressive Leitwendel ausgebildet ist, die am Innenumfang der Mantelfläche umläuft und das Kühlwasser führt. Durch eine solche umlaufende progressive Leitwendel ist garantiert, daß eine sehr gleichmäßige Kühlung der Mantelflächen erfolgt, was wiederum eine gleichmäßige Vorkristallisation der Schmelze fördert.

Um verschiedene Schichtdicken und Schmelzen vorkristallisieren zu können, ist es günstig, wenn der Scherspalt über einen Anschlag einstellbar ist. Dies geschieht durch Ändern des Walzenabstandes, wobei diese Änderung beispielsweise über Federelemente oder Druckzylinder so geschieht, daß die Schmelze nicht durch den Scherspalt gelangt, sondern am in Drehrichtung der Schmelze gesehenen Beginn des Scherspaltes angestaut wird und dann auf die jeweils nächste Walze aufgetragen wird.

Es kann auch günstig sein, die Walzen mit unterschiedlichem Durchmesser auszubilden, wobei dies jeweils in Abhängigkeit der vorzukristallisierenden Schmelze, d. h. der Keimbildungsgeschwindigkeit, angepaßt werden kann, so daß jeweils optimale Keimbildungsgeschwindigkeiten erreicht werden. Ebenso ist es günstig, wenn der erfindungsgemäße Vorkristallisator für verschiedenartige Schmelzen verwendet werden soll, daß die Walzenumfangsgeschwindigkeit für jede Walze getrennt regelbar ist. Damit können im Bereich des Scherspaltes unterschiedlich große Scherkräfte wirken, wobei dadurch wiederum auf die Keimbildung Einfluß genommen werden kann. Die Walzen können aber auch über einen gemeinsamen Antrieb so geregelt sein, daß sie ein festes Drehzahlverhältnis bilden.

Vorteilhaft ist es auch, wenn das Abschabemesser beheizbar ist. Dadurch wird das Abheben der vorkristallisierten Schmelze von der Walze erleichtert und außerdem verhindert, daß eine Krustenbildung am Abschabemesser einsetzt, die das zuverlässige Abheben der Schmelze beeinträchtigen würde.

Es ist weiterhin sehr günstig, wenn das Kühlband mit parallel zur Förderrichtung verlaufenden seitlich am Band angeordneten Stauleisten versehen ist, da hiermit die Möglichkeit gegeben ist, die vorkristallisierte Schmelze in dicker Schicht auf das Kühlband zum raschen Erstarren zu bringen. Dadurch kann die Kapazität des Kühlbandes erheblich gesteigert werden. Die Kühlung am Kühlband erfolgt am besten durch eine Zonenkühlung, bei der abschnittsweise verschiedene Temperaturen am Band über darunter angeordnete Kühlelemente erreicht werden können, so daß je nach Erstarrungsphase unterschiedlich Einfluß auf die Schmelze genommen werden kann.

Die Kapazität dieser Kristallisiereinrichtung kann sehr groß sein, wenn die Walzenbreite ca. 90 % der Kühlbandbreite beträgt. Dadurch wird nahezu die gesamte Kühlbandbreite ausgenützt, wobei eine gleichmäßige Verteilung der vorkristallisierten Schmelze auf dem Kühlband garantiert ist.

Zum gleichmäßigen Auftragen der Schmelze auf der obersten Walze ist es günstig, wenn ein Überlaufwehr oberhalb der obersten Walze so angeordnet ist, daß eine Aufgabelinie der Schmelze auf die oberste Walze etwas vor dem Scheitelpunkt der obersten Walze liegt. Ein solches Aufgabewehr garantiert eine gleichmäßige Produktverteilung über die gesamte Breite der Walze.

Weitere Vorteile und Merkmale der Erfindung ergeben sich aus den weiteren Ansprüchen und den in den Figuren gezeigten und im folgenden beschriebenen Ausführungsbeispielen einer erfindungsgemäßen Kristallisiereinrichtung. Es zeigt

Figur 1 eine schematisch dargestellte Seitenansicht einer erfindungsgemäßen Kristallisiereinrichtung,

Figur 1a eine Darstellung des Weges, den die Schmelze bei der ersten Ausführungsform über die Walzen nimmt,

Figur 1b eine Darstellung des Weges, den die Schmelze bei einer anderen Ausführungsform über die Walzen nimmt und

Figur 2 einen Querschnitt entlang der Linie II-II der Figur 1.

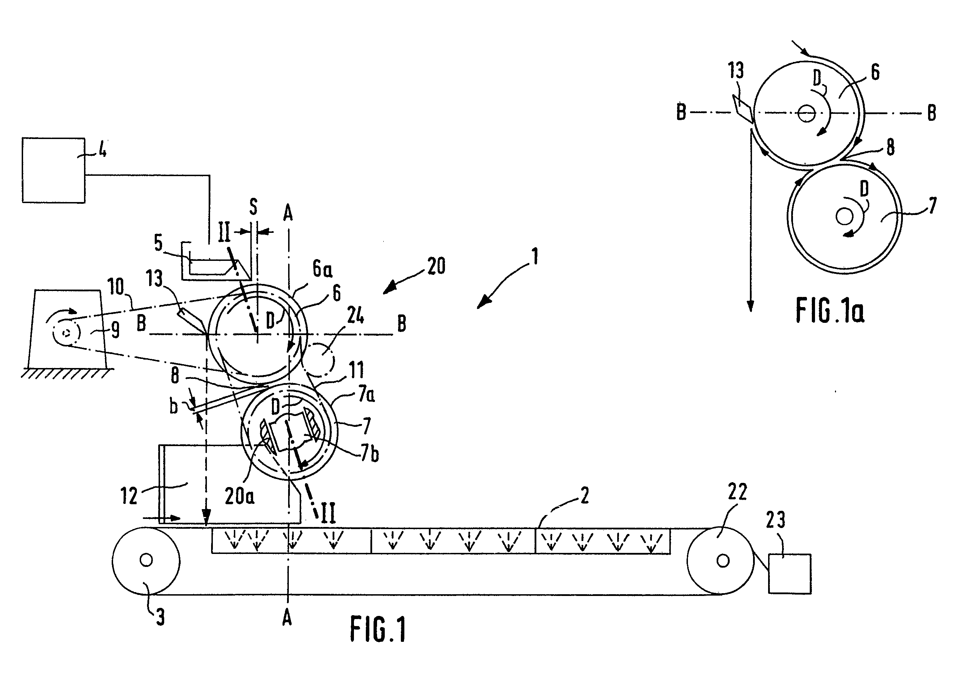

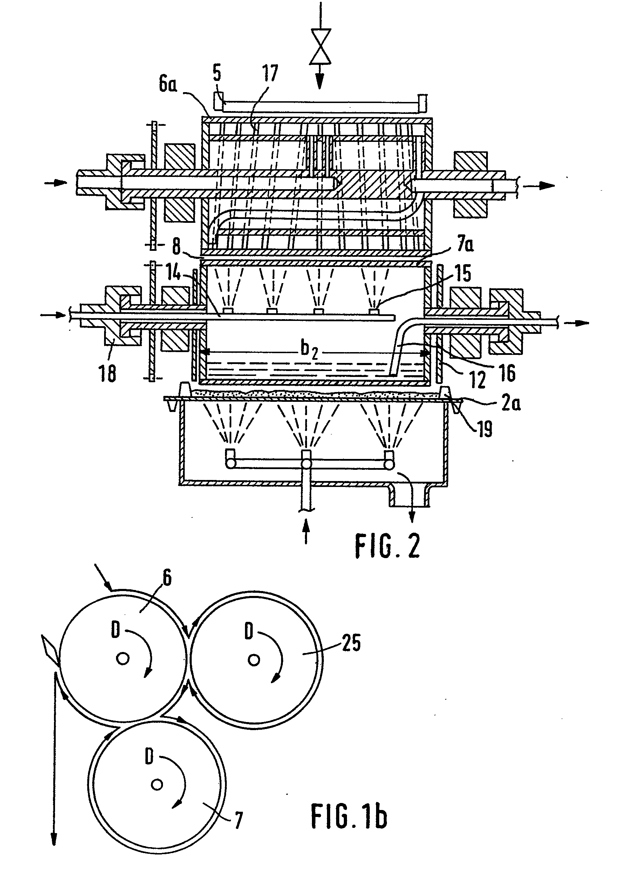

In der Fig. 1 ist eine Kristallisiereinrichtung 1 vorgesehen, die ein Kühlband 2 aufweist und einen Vorkristallisator 20, über den eine in einem Reaktor 4 erzeugte Schmelze auf das Kühlband 2 aufgebracht wird. Der Vorkristallisator 20 hat die Aufgabe, die Keimbildung so zu regeln, daß die auf das Kühlband 2 aufgebrachte Schmelze dort auskristallisieren kann. Das Kühlband 2 wird von Antriebsrollen 3 in der Art eines Endlosbandes angetrieben, wobei am abgabeseitigen Ende 22 die auskristallisierte Masse abgenommen und mit einem Brecher 23 zerkleinert werden kann.

Der Vorkristallisator 20 ist in dem in Fig. 1 und 1a gezeigten Ausführungsbeispiel aus zwei übereinander angeordneten Walzen 6 und 7 aufgebaut, wobei es aber auch denkbar ist, drei oder mehrere Walzen in derselben Art über/oder aneinander anzuordnen, wie das in Figur 1b gezeigt ist. Auf die oberste, beim Ausführungsbeispiel der Fig. 1 mit 6 bezeichnete Walze wird die Schmelze aufgetragen, und zwar in einem Bereich, der kurz vor dem Scheitelpunkt 5 der oberen Walze 6 liegt. Die Schmelze wird über ein Aufgabewehr 5 aufgebracht, welches eine gleichmäßige Verteilung der Schmelze auf der Mantelfläche 6a der Walze 6 in dünner Schicht garantiert. Die Walzen sind so angeordnet, daß die Achse der obersten Walze 6 parallel zu einer Vertikalebene A-A durch die Achse der unteren Walze 7 in Richtung zum Bandanfang versetzt angeordnet ist, war zur Folge hat, daß an der Abnahmestelle, an der ein Abschabemesser 13 die vorkristallisierte Schmelze abhebt, diese frei auf das darunter angeordnete Kühlband 2 fallen kann. Außerdem sind die Walzen 6 und 7 verschiebbar zueinander angeordnet. Im Ausführungsbeispiel ist die Walze 7 parallel zu der Schnittebene II-II verschiebbar mit ihrer Achse in einer Längsführung 20a gelagert. Die in dieser Länsgführung 20a verschiebbare Lagerung 7b ist in ihrer Relativlage zu der Walze 6 mit einem Anschlag zur Schichtdickenbegrenzung versehen und besitzt Federn oder Zylinder zur Erzeugung der Zuhaltekräfte.

Die beiden Walzen 6 und 7 werden über einen Antriebsmotor 9 so angetrieben, daß sie gleichsinnig in Pfeilrichtung D drehen. Dabei kann der Antreib der beiden Walzen synchron erfolgen, er kann aber auch getrennt erfolgen, so daß unterschiedliche Walzengeschwindigkeiten für die obere Walze und die untere Walze 7 erhalten werden. Der Antrieb der Walzen kann über keilriemen 10 und 11 geschehen, wobei ein keilriemenspanner 24 so angeordnet ist, daß die Übertragung zuverlässig erfolgen kann.

Die beiden Walzen 6 und 7 sind so zueinander angeordnet, daß die einen Scherspalt 8 bilden, dessen Breite kleiner als die Schichtdicke der aufgetragenen Schmelze ist, wobei dieser Scherspalt 8 durch Verschieben der Rollen zueinander variabel einstellbar ist, vorzugweise zwischen 0,1 und 0,5 mm. Der Weg der Schmelze, den diese über die Walzen 6 und 7 nimmt, ist in der Fig. 1a dargestellt, wobei zu erkennen ist, daß die Schmelze nicht durch den Scherspalt 8 gelangen kann, sondern sich bei Auftreffen in diesem Bereich anstaut, wobei dann durch die Drehung der unteren Walze 7 die Schmelze auf diese übertragen wird und dort weiter abgekühlt wird, bis sie von der anderen Seite her wieder auf den Scherspalt stößt, dort wiederum angestaut und auf die darüber liegende Walze 6 übertragen wird. Im Bereich der Mantelfläche der oberen Walze 6 ist das Abschabemesser 13 so angeordnet, daß es im Bereich des Schnittpunktes einer Horizontalen B-B durch die Achse der oberen Walze 6 mit dem zum Bandende weisenden Schnittpunkt liegt. Von dort wird die vorkristallisierte Schmelze dann abgehoben, wobei das Abschabemesser 13 heizbar sein kann und fällt auf das darunter angeordnete Band. Durch das Anstauen im Bereich des Scherspaltes wirken dort Scherkräfte auf die Schmelze, die die Keimbildung sehr steigern, indem die Keimzahl vergrößert wird. Im Scherspalt selbst wird die teilweise erstarrte auf den Walzen haftende Schmelze wieder aufgerieben und in den Bereich der angestauten Schmelze gebracht, wodurch die Keimbildung weiter gefördert wird.

Um die richtige Keimbildungstemperatur zu erreichen, wird die Schmelze stark abgekühlt, was mit Hilfe einer Kühleinrichtung geschehen kann, die von innen auf die Mantelflächen der Walzen wirkt. Dabei kann die Kühleinrichtung, wie dies Fig. 2 zeigt, aus einem entlang der Achse der Walzen verlaufenden Spritzbalken 14 gebildet sein, der mit Spritzdüsen 15 versehen ist, aus denen das über eine Stopfbuchse 18 eingeleitete Kühlwasser von innen auf die Mantelflächen spritzt. Die ist an der unteren Walze in Fig. 2 gezeigt (Mantelfläche 7a). Über eine Absaugvorrichtung 16 wird das Kühlwasser wieder abgepumpt und dem Kreislauf nach Kühlung wieder zugeführt. Die Kühleinrichtung kann aber auch aus progressiv umlaufenden Leitwendel 17 bestehen, deren Anschlüsse jeweils über die Achse mit dem Wasserkreislauf verbunden sind, wobei die Leitwendel 17 an der Mantelfläche 6a umlaufen. Mit einer solchen Leitwendel kann eine sehr gleichmäßige Kühlung bewirkt werden, die die Keimbildung beschleunigt und gleichmäßig fördert. Der Durchmesser der beiden, oder wenn mehrere Walzen vorgesehen sind, der Durchmesser dieser Walzen, kann unterschiedlich groß sein, wobei dies jeweils an die auszukristallisierende Schmelze angepaßt sein wird und im wesentlichen abhängig von der Keimbildungsgeschwindigkeit der jeweiligen Schmelze ist. Auch kann die Walzenumlaufgeschwindigkeit unterschiedlich gesteuert werden, so daß sich verschiedene Keimbildungszeiten im Vorkristallisator erreichen lassen. Aus der Fig. 2 ist auch zu erkennen, daß die Aufgabebreite $b_2$ der Schmelze ca. 90 % der Walzenbreite entspricht, so daß nahezu die gesamte Walzenfläche zur Vorkristallisation verwendet wird. Mit einer solchen Einrichtung können daher relativ große Schmelzmassen kontinuierlich verarbeitet werden.

Im Bereich des Bandes 2, von dem in Fig. 2 das obere Band 2a zu sehen ist, sind in Lägsrichtung verlaufende Stauleisten 19 angebracht, die es erlauben, daß relativ dicke Schichten von vorkristallisierte Schmelze auf das Band aufgebracht werden können. Im Aufgabebereich der vorkristallisierten Schmelze auf das Band ist noch ein Spritzschutz 12 angeordnet, der auch aus der Fig. 1 zu ersehen ist.

Die Umlaufgeschwindigkeit der Walzen ist so eingestellt, daß sie ca. 10 bis 50 mal schneller als das Kühlband ist. Dadurch wird garantiert, daß die Schmelze zwar in dünner Schicht vorkristallisiert werden kann, das Auskristallisieren aber auf dem Kühlband in großen Schichtdicken ermöglicht wird, so daß mit einer solchen Kristallisiereinrichtung große Mengen von Schmelze auskristallisiert werden können.

Eine weitere Anordnungsmöglichkeit der Walze zeigt Fig. 1b. Dort ist in einer horizontalen Ebene mit der oberen Walze 6 eine weitere Walze 25 angeordnet, über die die Schmelze bei der Vorkristallisation auf ihrem Weg vom Aufgabepunkt bis zum Abgabepunkt auf der Walze 6 entlang den dargestellten Pfeilen geführt wird. Wenn relativ weite Wege zur Vorkristallisation erforderlich sind, kann diese Anordnung vorteilhaft verwendet werden.

Eine solche Kristallisiereinrichtung kommt ohne Impflinge aus, die bei den bekannten Bauarten zur Einleitung bzw. zur Steigerung der Keimbildung der Schmelze zugeführt werden müssen. Durch die Erfindung kann darauf verzichtet werden. Außerden ist die Produktionskapazität größer als bei bekannten Bauarten.

**Ansprüche**

1. Kristallisiereinrictung, bestehend aus einem Kristallisierband (Kühlband) und einem Vorkristallisator, wobei die Keimbildung im Vorkristallisator in dünner Schicht eingeleitet wird und das Auskristallisieren auf dem Kühlband erfolgt, auf das die vorkristallisierte Schmelze in dicker Schicht aufgetragen wird, dadurch gekennzeichnet, daß der Vorkristallisator (20) aus mindestens zwei gleichsinnig umlaufenden Walzen (6, 7) gebildet wird, die oberhalb des Kühlbandes (2) übereinander so angeordnet sind, daß die Achse der obersten Walze (6) in Richtung zum Bandanfang parallel zu einer durch die Achse der unteren Walze (7) gelegten Vertikalebene (A-A) versetzt ist, daß die Walzen (6, 7) so angeordnet sind, daß ihre Mantelflächen (6a, 7a) an der Stelle ihres kürzesten Abstandes einen Scherspalt (8) bilden, dessen Breite (b) unterhalb der Schichtdicke der auf die oberste Walze (6) aufgetragenen Schmelze liegt und daß ein der Mantelfläche (6a) der obersten Walze (6) auf der in Richtung zum Bandanfang hin liegenden Seite angreifendes Abschabemesser (13) vorgesehen ist.

2. Kristallisiereinrictung nach Anspruch 1, dadurch gekennzeichnet, daß die Walzen (6, 7) mit einer Kühleinrichtung zur Abkühlung der Mantelflächen (6a, 7a) der Walzen (6, 7) versehen sind.

3. Kristallisiereinrichtung nach Anspruch 1 und 2, dadurch gekennzeichnet, daß als Kühleinrichtung ein von der Walzenachse gebildeter Spritzbalken (14) vorgesehen ist, welcher mit einem Wasserkreislauf verbunden ist und innerhalb der Kontur der Mantelfläche (7a) Spritzdüsen (15) aufweist, die gegen die Innenwand der Mantelfläche (7a) gerichtet sind und daß eine Absaugvorrichtung (16) vorgesehen ist, die das Kühlwasser aus dem Innenraum wieder dem Wasserkreislauf zuführt.

4. Kristallisiereinrichtung nach Anspruch 1 und 2, dadurch gekennzeichnet, daß als Kühleinrichtung eine progressive Leitwendel (17) ausgebildet ist, die am Innenumfang der Mantelfläche (6a) umläuft und das Kühlwasser führt.

5. Kristallisiereinrichtung nach mindestens einem der vorangegangenen Ansprüche, dadurch gekennzeichnet, daß der Scherspalt (8) über einen Anschlag einstellbar ist und daß die Zuhaltekräfte über Federelemente oder Druckzylinder aufgebracht werden.

6. Kristallisiereinrichtung nach mindestens einem der vorangegangenen Ansprüche, dadurch gekennzeichnet, daß die Walzen mit unterschiedlichem Durchmesser ausgebildet sind.

7. Kristallisiereinrichtung nach mindestens einem der vorangegangenen Ansprüche, dadurch gekennzeichnet, daß die Walzenumfanggeschwindigkeit für jede Walze (6, 7) getrennt regelbar ist.

8. Kristallisiereinrichtung nach Anspruch 1 bis 6, dadurch gekennzeichnet, daß die Walzen ein festes Drehzahlverhältnis bilden und einen gemeinsamen Antrieb haben.

9. Kristallisiereinrichtung nach mindestens einem der vorangegangenen Ansprüche, dadurch gekennzeichnet, daß das Abschabemesser (13) beheizbar ist.

10. Kristallisierenrichtung nach mindestens einem der vorangegangenen Ansprüche, dadurch gekennzeichnet, daß das Kühlband (2) mit parallel zur Förderrichtung verlaufenden, seitlich am Band angeordneten Stauleisten (19) versehen ist.

11. Kristallisiereinrichtung nach mindestens einem der vorangegangenen Ansprüche, dadurch gekennzeichnet, daß die Walzenbreite ($b_2$) ca. 90 % der Kühlbandbreite beträgt.

12. Kristallisiereinrichtung nach mindestens einem der vorangegangenen Ansprüche, dadurch gekennzeichnet, daß das Aufgabewehr (5) oberhalb der obersten Walze (6) so angeordnet ist, daß die Aufgabelinie der Schmelze auf die oberste Walze (6) etwas vor dem Scheitelpunkt (S) der oberen Walze in Drehrichtung gesehen liegt.

13. Kristallisiereinrichtung nach Anspruch 1, dadurch gekennzeichnet, daß das Abschabemesser (13) im Bereich der Schnittlinie der Horizontalebene (B-B) durch die Achse der obersten Walze (6) mit der Mantelfläche (6a) der Walze (6) an dieser Mantelfläche (6a) angreift.

14. Kristallisiereinrichtung nach einem der vorangegangenen Ansprüche, dadurch gekennzeichnet, daß die Umfangsgeschwindigkeit der Walzen (6, 7) ca. 10-50 mal höher als die Bandgeschwindigkeit des Kühlbandes gewählt ist.

15. Kristallisiereinrichtung nach einem der vorangegangenen Ansprüche, dadurch gekennzeichnet, daß neben der oberen Walze (6) eines übereinander angeordnetes Walzenpaar (6, 7) etwa auf derselben Horizontalebene eine weitere Walze (25) vorgesehen ist, die mit der oberen Walze (6) einen Scherspalt bildet.

**Claims**

1. Crystallisation device, consisting of a crystalising belt (cooling belt) and a pre-crystalliser, nucleation being initiated in the pre-crystalliser in the thin layer and crystallising out taking place on the cooling belt, onto which the pre-crystallised melt is applied in a thick layer, characterised in that the pre-crystalliser (20) is constituted by at least two equidirectionally rotating rollers (6, 7) which are so disposed above the cooling belt (2) and above each other that the axis of the upper roller (6) is staggered in the direction of the start of the belt parallel with a vertical plane (A-A) extending through the axis of the lower roller (8), and in that the rollers (6, 7) are so disposed that their shells (6a, 7a) form at the point at which they are closest together a shearing gap (8), the width (b) of which is below the thickness of the layer of melt applied to the upper roller (6) and in that a scraper blade (13) is provided which is applied to the shell (6a) of the upper roller (6) on the side which is towards the start of the belt.

2. Crystallisation device according to Claim 1, characterised in that the rollers (6, 7) are provided with a cooling means for cooling the shells (6a, 7a) of the rollers (6, 7).

3. Crystallisation device according to Claim 1 and 2, characterised in that the cooling device provided is a spray bar (14) constitued by the roller spindle and which is connected to a water circuit and which has within the contours of the shell (7a) spray jets (15) which are directed towards the inside wall of the shell (7a) and in that a suction means (16) is provided which feeds the cooling water out of the interior and back to the water circuit.

4. Crystallisation device according to Claim 1 and 2, characterised in that the cooling means is a progressive coil (17) which carries the cooling water and extends around the inner periphery of the shell (6a).

5. Crystallisation device according to at least one of the preceding Claims, characterised in that the shearing gap (8) is adjustable via an abutment and in that the forces which tend to close the gap are applied via spring elements or pressure cylinders.

6. Crystallisation device according to at least one of the preceding Claims, characterised in that the rollers are constructed of different diameters.

7. Crystallisation device according to at least one of the preceding Claims, characterised in that the peripheral speed of the rollers is separately regulable for each roller (6, 7).

8. Crystallisation device according to Claim 1 to 6, characterised in that the rollers have a fixed speed ratio and common drive.

9. Crystallisation device according to at least one of the preceding Claims, characterised in that the scraper blade (13) can be heated.

10. Crystallisation device according to at least one of the preceding Claims, characterised in that the cooling belt (2) is provided with retainer strips (19) disposed laterally on the belt and extending parallel with the direction of conveyance.

11. Crystallisation device according to at least one of the preceding Claims, characterised in that the width ($b_2$) of the roller is approximately 90 % of the width of the cooling belt.

12. Crystallisation device according to at least one of the preceding Claims, characterised in that the feeder barrier (5) is so disposed above the upper roller (6) that the line of melt feed onto the upper roller (6) is situated somewhat upstream of the apex (S) of the upper roller when viewed in the direction of rotation.

13. Crystallisation device according to Claim 1, characterised in that the scraper blade (13) engages the shell (6a) of the roller (6) in the region of the line at which the horizontal plane (B-B) through the axis of the upper roller (6) intersects the shell (6a) of the roller (6).

14. Crystallisation device according to one the preceding Claims, characterised in that the peripheral speed of the rollers (6, 7) is chosen to be approx. 10 to 50 times greater than the belt speed of the cooling belt.

15. Crystallisation device according to one of the preceding Claims, characterised in that beside the upper roller (6) of a superposed pair of rollers (6, 7) and substantially on the same horizontal plane there is a further roller (25) which forms a shearing gap with the upper roller (6).

**Revendications**

1. Dispositif de cristallisation, constitué d'une bande de cristallisation (bande de refroidissement) et d'un précristallisateur, la formation des germes étant entreprise dans le précristallisateur en couche mince, tandis que la cristallisation complète s'effectue sur la bande de refroidissement, sur laquelle la masse fondue précristallisée est rapportée en couche épaisse, dispositif caractérisé en ce que le précristallisateur (20) est constitué d'au moins deux cylindres (6, 7) tournant dans le même sens, qui sont disposés l'un au-dessus de l'autre au-dessus de la bande de refroidissement (2), de sorte que l'axe du cylindre supérieur (6) est décalé en direction du début de la bande parallèlement à un plan vertical (A-A) passant par l'axe du cylindre inférieur (7), les cylindres (6, 7) étant disposés de façon que leurs surfaces enveloppes (6a, 7a), à l'endroit de leur plus courte distance, ménagent une fente de cisaillement (8), dont la largeur (b) est inférieure à l'épaisseur de la couche de la masse fondue rapportée sur le cylindre supérieur (6), tandis qu'il est prévu un couteau râcleur (13) venant en prise sur la surface enveloppe (6a) du cylindre supérieur (6) du côté du début de la bande.

2. Dispositif de cristallisation selon la revendication 1, caractérisé en ce que les cylindres (6, 7) sont munis d'un dispositif de refroidissement pour refroidir les surfaces enveloppes (6a, 7a) des cylindres (6, 7).

3. Dispositif de cristallisation selon l'une des revendications 1 et 2, caractérisé en ce que, comme dispositif de refroidissement, il est prévu une rampe de pulvérisation (14) reliée à un circuit d'eau et qui comporte à l'intérieur du contour de la surface enveloppe (7a) des buses de pulvérisation (15) dirigées vers la paroi interne de la surface enveloppe (7a), tandis qu'il est prévu un dispositif d'aspiration (16) qui ramène l'eau de refroidissement au circuit d'eau, à partir de l'espace interne du cylindre.

4. Dispositif de cristallisation selon l'une des revendications 1 et 2, caractérisé en ce qu'il est prévu comme dispositif de refroidissement, une canalisation en hélice progressive (17) s'entendant contre la périphérie interne de la surface enveloppe (6a) et canalisant l'eau de refroidissement.

5. Dispositif de cristallisation selon au moins une des précédentes revendications, caractérisé en ce que la fente de cisaillement (8) est susceptible d'être réglée par l'intermédiaire d'une butée, et que les efforts de maintien contre cette butée sont apportés par l'intermédiaire d'éléments élastiques ou bien de vérins.

6. Dispositif de cristallisation selon au moins une des précédentes revendications, caractérisé en ce que les cylindres sont prévus avec des diamètres différents.

7. Dispositif de cristallisation selon au moins une des précédentes revendications, caractérisé en ce que la vitesse périphérique des cylindres est susceptible d'être réglée séparément pour chaque cylindre (6, 7).

8. Dispositif de cristallisation selon l'une des revendications 1 à 6, caractérisé en ce que les cylindres sont dans un rapport de vitesses de rotation fixe et ont un entraînement commun.

9. Dispositif de cristallisation selon au moins une des précédentes revendications, caractérisé en ce que le couteau râcleur (13) est susceptible d'être chauffé.

10. Dispositif de cristallisation selon au moins une des précédentes revendications, caractérisé en ce que la bande de refroidissement (2) est munie de lattes de retenue s'étendant parallèlement à la direction de transport et disposées latéralement sur la bande.

11. Dispositif de cristallisation selon au moins une des précédentes revendications, caractérisé en ce que la largeur des cylindres ($b_2$) est d'envi-ron 90 % de la largeur de la bande de refroidissement.

12. Dispositif de cristallisation selon au moins une des précédentes revendications, caractérisé en ce que le déversoir d'alimentation (5) au-dessus du cylindre supérieur (6) est disposé de façon que la ligne d'alimentation de la masse fondue sur le cylindre supérieur (6) se situe, par rapport au sens de rotation, quelque peu en avant du sommet (S) du cylindre supérieur.

13. Dispositif de cristallisation selon la revendication 1, caractérisé en ce que le couteau râcleur (13) vient en prise sur la surface enveloppe (6a) du cylindre supérieur (6) au voisinage de la ligne où le plan horizontal (B-B) passant par l'axe du cylindre supérieur ((6) coupe la surface enveloppe (6a) de ce cylindre (6).

14. Dispositif de cristallisation selon une des précédentes revendications, caractérisé en ce que la vitesse périphérique des cylindres (6, 7) est 10 à 50 fois plus élevée que la vitesse de la bande de refroidissement.

15. Dispositif de cristallisation selon une des précédentes revendications, caractérisé en ce que, à côté du cylindre supérieur (6) d'une paire de cylindres (6, 7) disposés l'un au-dessus de l'autre, il est prévu, sur le même plan horizontal, un autre cylindre (25) ménageant avec le cylindre supérieur (6) une fente de cisaillement.

FIG.1a

FIG.1

0 063 688

FIG. 2

FIG.1b